# EUROPÄISCHE PATENTSCHRIFT

(11) **EP 1 231 588 B1**
(45) Veröffentlichungstag und Bekanntmachung des Hinweises auf die Patenterteilung: **13.08.2003**
(21) Anmeldenummer: 01103271.1
(22) Anmeldetag: 12.02.2001
(51) Int. Cl.: G09F 9/313, G02F 1/133, H05K 7/20, H01J 17/49, H01J 17/28

(54) **Vorrichtung zur Halterung und Kühlung von Flachbildschirmen**
Device for supporting and cooling of flat screens
Dispositif pour le support et le refroidissement des écrans plats

(43) Veröffentlichungstag der Anmeldung: 14.08.2002
(73) Patentinhaber: Innowert Service-Center IN Gesellschaft für Innovation und Kommunikationstechnik mbH, 99610 Sömmerda (DE)
(72) Erfinder: Wellhöfer, Stefan, D-99195 Schlossvippach (DE)
(74) Vertreter: Körner, Ekkehard, Dipl.-Ing.

(56) Entgegenhaltungen:
- EP-A- 0 821 385
- PATENT ABSTRACTS OF JAPAN vol. 1995, no. 11, 26. Dezember 1995 (1995-12-26) & JP 07 210093 A (FUJITSU GENERAL LTD), 11. August 1995 (1995-08-11)
- PATENT ABSTRACTS OF JAPAN vol. 1998, no. 10, 31. August 1998 (1998-08-31) & JP 10 116036 A (FUJITSU GENERAL LTD), 6. Mai 1998 (1998-05-06)
- PATENT ABSTRACTS OF JAPAN vol. 1999, no. 09, 30. Juli 1999 (1999-07-30) & JP 11 119216 A (I O DATA DEVICE INC), 30. April 1999 (1999-04-30)

## Beschreibung

Die vorliegende Erfindung betrifft eine Vorrichtung zur Halterung und Kühlung von Flachbildschirmen.

Von einem Flachbildschirm kann gesprochen werden, sobald das Verhältnis von Bilddiagonale zur Bautiefe etwa 10:1 oder mehr beträgt. Derartige Flachbildschirme sind derzeit in erster Linie aufgrund der Platz- und Gewichtsersparnis gegenüber den bisher verwendeten Geräten mit Elektronenstrahl-Bildröhren stark im Kommen und werden die herkömmlichen Bildschirme in naher Zukunft ablösen.

Die beiden wichtigsten Typen von Flachbildschirmen sind LCD-Bildschirme und Bildschirme mit Plasma-Display, im folgenden kurz Plasmabildschirme genannt.

Beide Flachbildschirmarten erzeugen während des Betriebs Wärme, die möglichst schnell und sicher aus dem sie umschließenden Gehäuse abtransportiert werden muß. Insbesondere bei Plasmabildschirmen fallen vor allem aufgrund der hohen Spannungen, die benötigt werden, um das jeweilige Gasgemisch in den Licht emittierenden Plasmazustand zu überführen, erhebliche Wärmemengen an.

Die Kühlung von Flachbildschirmen erfolgt bisher üblicherweise über mehrere aktive Lüfter. Bei unbeaufsichtigtem Betrieb kann ein Ausfall eines oder mehrerer Lüfter jedoch zur Zerstörung der wärmeerzeugenden Einheiten bzw. des gesamten Bildschirmes führen. Hinzu kommt, daß die Lüfter zusätzlichen Platz innerhalb des den Flachbildschirm aufnehmenden Gehäuses beanspruchen, wodurch dessen Tiefe erhöht wird. Außerdem bringt die Verwendung von Lüftern Nebengeräusche mit sich, die sowohl beim Hausgebrauch des Flachbildschirmes (etwa als Femsehgerät) als auch bei professioneller Anwendung (z.B. Überwachungsmonitor) unangenehm auffallen.

Aus EP 0 821 385 A2, die den nächstkommenden Stand der Technik darstellt, ist ein Plasmabildschirm bekannt, der aus einem Gehäuse aus einem mit einem Durchbruch für ein Plasmadisplay versehenen Vorderteil und einem glatten Rükkenteil besteht. In dem Gehäuse befindet sich eine Inneneinheit aus einem Chassis und einem Plasmadisplay, die als eine Art zweites Innengehäuse betrachtet werden kann. Zwischen dem Plasmadisplay und dem Chassis ist ein Wärmeleit-Silikongel angebracht, das Wärme von dem Plasmadisplay auf das Chassis überträgt. Das Chassis besteht aus Aluminium, ist auf seiner dem Plasmadisplay zugewandten Seite flach und trägt auf seiner Rückseite Schaltungselemente und Wärmeleitrippen, wobei letztere integral mit dem Chassis gespritzt sind. In einer besonderen Ausführungsform kann auf die Rippen ein Kühlkörper aufgesetzt sein, der vertikal verlaufende Kanäle ausbildet. So wird die durch das Plasmadisplay erzeugte Wärme an die Umgebungsluft innerhalb des äußeren Gehäuses abgegeben.

Der Erfindung liegt die Aufgabe zugrunde, eine äußerst klein dimensionierte Vorrichtung zur Halterung und Kühlung von Flachbildschirmen zu schaffen, mit deren Hilfe die erzeugte Wärme sehr sicher und ohne Erzeugung von Nebengeräuschen abgeführt wird und gleichzeitig der Wartungs- und Reparaturaufwand auf ein Minimum reduziert ist.

Diese Aufgabe wird durch die Merkmale des Anspruchs 1 gelöst. Vorteilhafte Ausgestaltungen der Erfindung sind Gegenstand der Unteransprüche.

Die erfindungsgemäße Vorrichtung zur Halterung und Kühlung von Flachbildschirmen während des Betriebes weist ein Gehäuse zur Aufnahme des Flachbildschirmes und gegebenenfalls weiterer wärmeerzeugender elektrischer und/oder elektronischer Einheiten auf, außerdem Wärmebrücken zur Leitung der zumindest vom Flachbildschirm einschließlich dessen elektronischer Ansteuerbaugruppen erzeugten Wärme zu einer wärmeleitfähigen Rückwand des Gehäuses. Die Rückwand ist mit mindestens einem Profil derart versehen, daß an der Rückseite des Gehäuses eine Vielzahl kaminähnlicher Hohlräume ausgebildet ist, die in ihrem unteren Endbereich mindestens eine Öffnung zur Zuführung kühler Luft in jeden Hohlraum aufweisen, sowie mindestens eine Austrittsöffnung im oberen Endbereich jedes Hohlraums zur Abgabe erwärmter Luft nach außen.

Die besondere Kühlfunktion der vorliegenden Erfindung wird dadurch geliefert, dass die Rückwand des Gehäuses mehrere im Bereich der Hohlräume angeordnete Durchtrittsöffnungen aufweist, die zum Zu- und Abführen von Luft in einen bzw. aus einem zwischen den wärmeerzeugenden Einheiten und der Rückwand angeordneten Raum aus den bzw. in die genannten Hohlräume(n) (6) dienen.

Um die zwischen der Leiterplatte und einer abschließenden vorderseitigen Glasplatte des Bildschirmes befindliche, beim Betrieb des Bildschirmes erwärmte Luft problemlos nach außen führen zu können, ist vorteilhafterweise mindestens ein Kanal vorgesehen, durch den die Luft in den Raum zwischen Leiterplatte und Rückwand gelangen kann.

Zur flexibleren Gestaltung der Vorrichtung ist vorteilhafterweise vorgesehen, daß das Profil auf die Rückwand aufschraubbar ist.

Damit die Vorrichtung die Geräteschutzbestimmungen hinsichtlich der maximal erlaubten Außentemperatur an Geräten problemlos erfüllen kann, sind die kaminähnlichen Hohlräume im Querschnitt vorteilhafterweise im wesentlichen patronenförmig mit dem abgerundeten Ende nach außen ausgebildet.

Vorteilhafterweise sind die einzelnen kaminähnlichen Hohlräume voneinander beabstandet angeordnet, so daß eine zusätzliche Luftkühlung der Verbindungsflächen in den Zwischenräumen und der U-förmigen Hohlraumumrandungen stattfindet.

Vorteilhafterweise sind der Gehäuserahmen und die Rückwand aus stranggepressten Aluminiumprofilen gebildet, die wenig Gewicht aufweisen und leicht bearbeitbar sind.

Um die Stabilität bei gleichzeitiger optischer Ästhetik zu gewährleisten, sind die Rahmenteilstücke vorteilhafterweise durch Laserschweißen miteinander verbunden.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1: eine perspektivische, schematische Rückansicht einer bevorzugten Ausführungsform der erfindungsgemäßen Vorrichtung zur Halterung und Kühlung von Flachbildschirmen;
- Fig.2: eine Rückansicht einer bevorzugten Ausführungsform der erfindungsgemäßen Vorrichtung;
- Fig.3: einen Querschnitt durch eine bevorzugte Ausführungsform eines Profils;
- Fig. 4: eine Draufsicht auf die Vorrichtung gemäß Fig. 2; und
- Fig. 5: eine schematische Darstellung einer bevorzugten Ausführungsform der Rückwand der erfindungsgemäßen Vorrichtung zur Halterung und Kühlung von Flachbildschirmen.

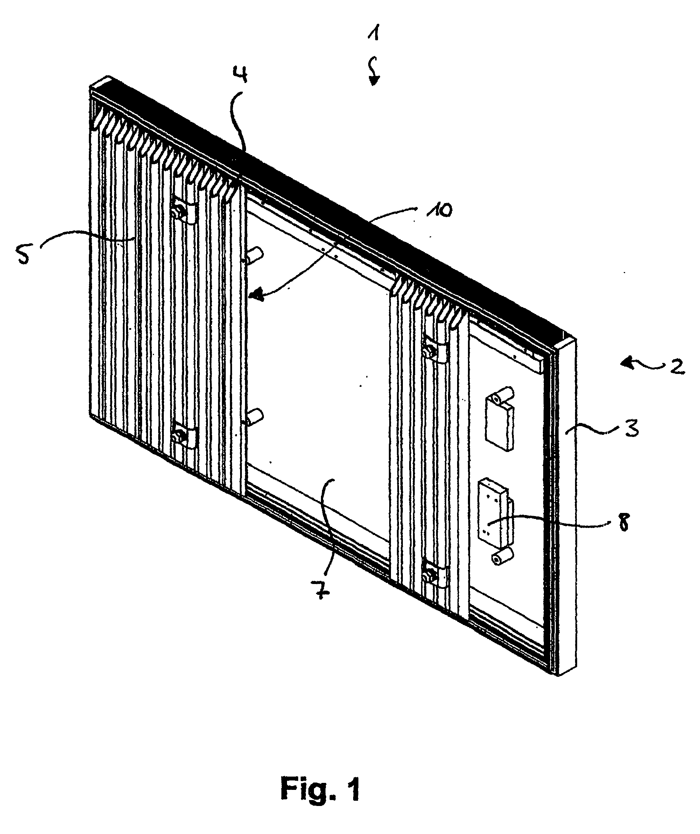

In Fig. 1 ist eine bevorzugte Ausführungsform der erfindungsgemäßen Vorrichtung 1 zur Halterung und Kühlung von Flachbildschirmen schematisch von hinten dargestellt. Die Vorrichtung 1 weist ein Gehäuse 2 auf, das aus einem flachen Gehäuserahmen 3 und einer zur Darstellung des inneren Aufbaus hier nur bruchstückhaft dargestellten Rückwand 4 mit aufgebrachtem Profil 5 gebildet ist. An der Vorderseite des Gehäuses 2 ist wie bei Bildschirmen üblich eine Glasplatte angeordnet. Der Gehäuserahmen 3 ist bevorzugterweise aus mehreren Rahmenteilstücken gebildet, die aus stranggepressten Aluminiumprofilen bestehen, welche wiederum miteinander, bevorzugt durch Laserschweißen, verbunden sind. Im Rahmen 3 ist eine Leiterplatte 7 über geeignete Befestigungsmittel befestigt, auf der die zum Betrieb des Flachbildschirms benötigten Schaltkreise und/oder Ansteuerbaugruppen angeordnet sind. Die Leiterplatte 7 ist derart im Rahmen 3 befestigt, daß zwischen ihr und der Rückwand 4 ein Raum 10 entsteht, in dem sich Luft befindet. Dieser Raum 10 steht über mindestens einen Kanal (nicht gezeigt) mit dem Bereich zwischen Leiterplatte 7 und abschließender Glasplatte in Verbindung. Auf der Leiterplatte 7 sind an mehreren Stellen Wärmebrücken 8 zur Verbindung zwischen Leiterplatte 7 und Rückwand 4 ausgebildet. Diese Wärmebrücken 8 sind an besonders heißen Stellen der Leiterplatte 7, bei einem Plasmabildschirm etwa in der Nähe von Schaltkreisen mit bis zu 25 W Leistung, angeordnet und stehen im montierten Zustand in direktem Kontakt mit der Rückwand 4. Die Wärmebrücken 8 sind bevorzugt als Aluminiumklötze ausgebildet oder bestehen aus einem ähnlich wärmeleitfähigen Material.

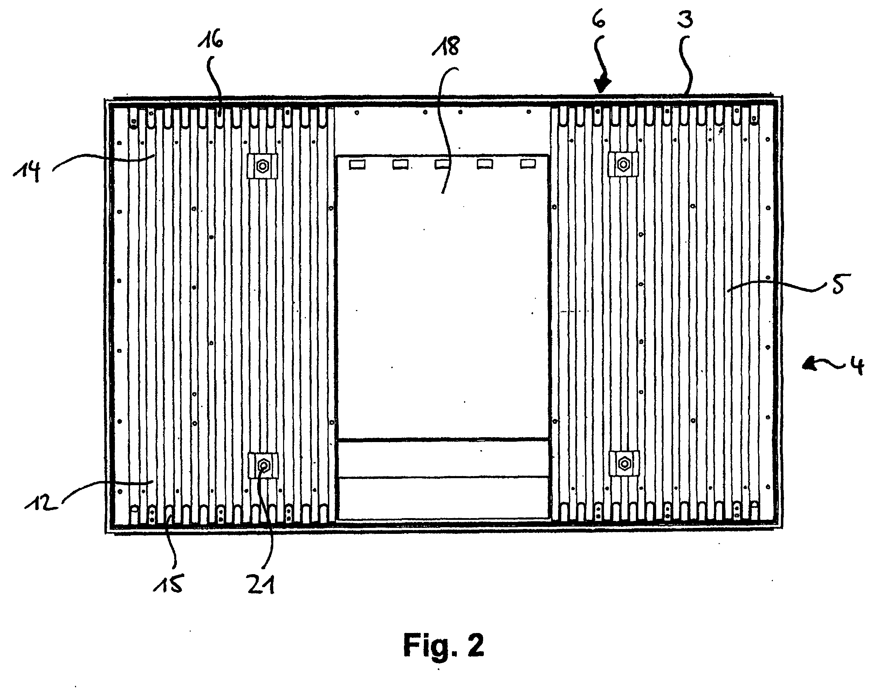

Fig. 2 zeigt eine schematische Rückansicht einer Ausführungsform der erfindungsgemäßen Vorrichtung 1 in montiertem Zustand. Die Profile 5 sind auf der Rückwand 4 über Schrauben 21 befestigt und weisen jeweils mehrere kaminähnliche Hohlräume 6 auf, die in vertikaler Richtung verlaufen. Die Hohlräume 6 weisen in ihrem unteren Endbereich 12 Eingangsöffnungen 15 und in ihrem oberen Endbereich 14 Ausgangsöffnungen 16 auf. Ebenso ist es denkbar, daß die Rückwand 4 selbst einstückig mit derartigen kaminähnlichen Hohlräumen 6 ausgebildet ist. Zwischen den beiden Bereichen, in denen die Profile 5 aufgeschraubt sind, kann wie im vorliegenden Fall ein zusätzlicher Kasten 18 mit der Rückwand 4 verbunden sein, in dem beispielsweise Stromversorgung, VGA-Karte und die Ansteuerungselektronik für den Flachbildschirm beinhaltet sind. Die Wärmeabführung der darin enthaltenen Komponenten erfolgt wiederum beispielsweise über Wärmebrücken auf die Rückwand 4 bzw. über Luftlöcher nach außen.

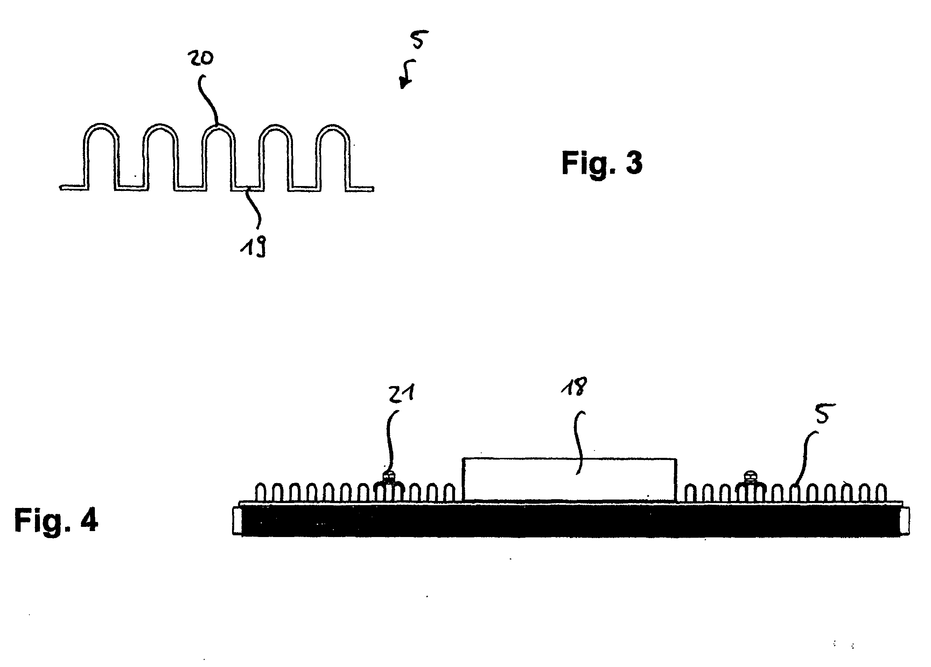

in Fig. 3 ist eine bevorzugte Ausführungsform eines Profils 5 in Querschnittsansicht gezeigt. Das Profil besteht aus mehreren, über horizontale Verbindungsflächen 19 verbundene, U-förmige Ausbuchtungen 20, die in regelmäßigen Abständen nebeneinander angeordnet sind. Der Abstand zwischen zwei derartigen Ausbuchtungen 20 ist hierbei etwa gleich den seitlichen Abmessungen einer Ausbuchtung 20.

Werden derartige Profile 5 über geeignete Schrauben 21 oder eine andere Befestigungsvorrichtung mit der Rückwand 4 verbunden, wie in Fig. 4 gezeigt, so entstehen zwischen Rückwand 4 und den Ausbuchtungen 20 der Profile 5 die kaminähnlichen Hohlräume 6, die jeweils patronenförmig ausgebildet sind, wobei das abgerundete Ende der Ausbuchtungen 20 nach außen zeigt. Je länger die Schenkel der U-förmigen Ausbuchtungen 20 sind, desto besser ist die Kühlwirkung. Die Verbindungsflächen 19 liegen im montierten Zustand direkt an der Rückwand 4 an, so daß an diesen ein Wärmeübertrag durch Wärmeleitung stattfindet. Profile 5 und Rückwand 4 sind bevorzugterweise ebenfalls aus stranggepressten Aluminiumprofilen gebildet.

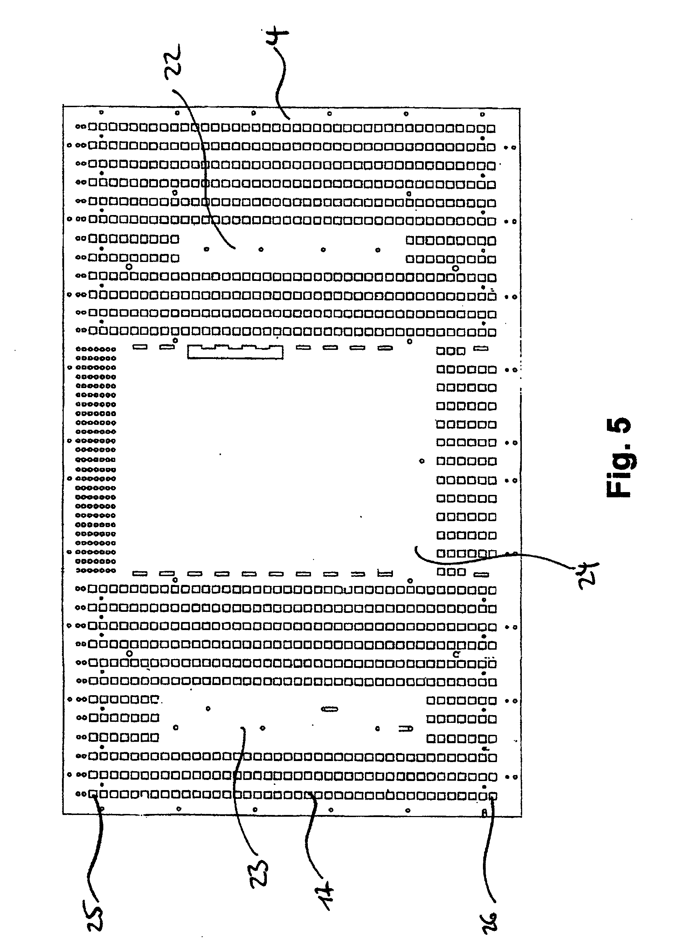

In Fig. 5 ist eine Ausführungsform einer Rückwand 4 der erfindungsgemäßen Vorrichtung 1 dargestellt. Die Rückwand 4 weist im vorliegenden Beispielsfalle drei ganzheitliche Flächen 22, 23 und 24 auf. Die beiden Flächen 22 und 23 sind dabei so angeordnet, daß sie im montierten Zustand mit den an der Leiterplatte 7 angeordneten Wärmebrücken 8 in festen Kontakt kommen. Die mittlere Fläche 24 ist für die Befestigung des Betriebskastens 18 vorgesehen. Auf der restlichen Rückwand 4 sind im Abstand der Profilhohlräume 6 mehrere vertikal verlaufende Reihen von beispielsweise quadratisch geformten Durchtrittsöffnungen 17 angeordnet. Auf der Innenseite der Rückwand 4 können jeweils zwischen zwei Reihen von Durchtrittsöffnungen 17 im Sinne einer besseren Wärmeaufnahme aus der im Raum 10 befindlichen Luft zusätzliche Rippen oder andere Oberflächenvergrößerungen angeordnet sein.

Während des Betriebs des Flachbildschirmes werden die wärmeerzeugenden Elemente des Flachbildschirmes auf der Leiterplatte 7 heiß und geben ihre Wärme direkt über die Wärmebrücken 8 an die geschlossenen Flächen 22, 23 der Rückwand 4 des Gehäuses 2 ab. Die abgeleitete Wärme verteilt sich über die Rückwand 4 auf den Verbindungsflächen 19 und Ausbuchtungen 20 der Profile 5 und wird an die Luft in den Hohlräumen 6 bzw. an die Umgebungsluft abgegeben. Die erwärmte Luft strömt in den Hohlräumen 6 nach oben und wird über die Öffnungen 16 an die Umgebung abgegeben, während gleichzeitig von unten durch die Öffnungen 15 kühle Luft nachströmt. Auch die Verbindungsflächen 19 und Ausbuchtungen 20 geben Wärme nach außen an die sie umgebende Luft ab, wobei das bekannte Prinzip der Oberflächenvergrößerung ausgenutzt wird. Ebenso ist es jedoch denkbar, die Hohlräume 6 direkt nebeneinander anzuordnen. Die zwischen Leiterplatte 7 und vorderseitiger Glasplatte befindliche Luft erwärmt sich ebenfalls stark und wird über mehrere Kanäle seitlich und oberhalb der Leiterplatte in den Raum 10 geleitet, und zusammen mit der in dem Raum befindlichen, über die Komponenten der Leiterplatte 7 erwärmte Luft durch die Durchtrittsöffnungen 17, insbesondere die oberen Durchtrittsöffnungen 25, in die kaminähnlichen Hohlräume 6 geleitet. Die erwärmte Luft wird dort aufgrund der Sogwirkung der Hohlräume wieder nach oben durch die Austrittsöffnungen 16 an die Umgebung abgegeben. Gleichzeitig strömt durch die weiter unten angeordneten Durchtrittsöffnungen 26 kühle Luft in den Raum 10 und über Verbindungskanäle in den Bereich zwischen Leiterplatte 7 und frontseitiger Glasplatte.

Durch den oben beschriebenen Kühlungsmechanismus werden erhebliche Wärmemengen nach außen transportiert, und es wird gewährleistet, daß die gemäß den Vorschriften zur Gerätesicherheit zu beachtende Höchstgrenze der Temperatur an Außenflächen von 42°C weder am Gehäuserahmen noch am Profil erreicht wird.

Es ist auch denkbar, weitere elektrische und/oder elektronische Einheiten, etwa Motherboards für den Betrieb der Flachbildschirme, ebenfalls in das Gehäuse zu integrieren, und die dadurch erzeugte Mehrwärme über ähnliche Kühlungsmechanismen abzutransportieren.

## Patentansprüche

1. Vorrichtung (1) zur Halterung und Kühlung eines Flachbildschirms während des Betriebes, mit einem Gehäuse (2) zur Aufnahme des Flachbildschirmes und wärmeerzeugender elektrischer und/oder elektronischer Einheiten, mit mindestens einer Wärmebrücke (8) zur Leitung der von diesen erzeugten Wärme zu einer wärmeleitfähigen Rückwand (4) des Gehäuses, die mit einem Profil (5) versehen ist, das derart ausgestaltet ist, daß an der Rückseite des Gehäuses (2) eine Vielzahl kaminähnlicher Hohlräume (6) ausgebildet ist, die in ihrem unteren Endbereich (12) jeweils mindestens eine Öffnung (15) zur Zuführung kühler Luft in jeden Hohlraum (6) aufweisen sowie jeweils mindestens eine Austrittsöffnung (16) im oberen Endbereich (14) jedes Hohlraums (6) zur Abgabe erwärmter Luft nach außen aufweisen,
**dadurch gekennzeichnet, dass**
die Rückwand (4) des Gehäuses (2) mehrere im Bereich der Hohlräume (6) angeordnete Durchtrittsöffnungen (17) aufweist, die zum Zu- und Abführen von Luft in einen bzw. aus einem zwischen den wärmeerzeugenden Einheiten und der Rückwand (4) angeordneten Raum (10) aus den bzw. in die genannten Hohlräume(n) (6) dienen.

2. Vorrichtung (1) nach Anspruch 1, bei der an mindestens einer Stelle einer an einem Gehäuserahmen (3) befestigten Leiterplatte (7), auf der eine Mehrzahl wärmeerzeugender Komponenten des Flachbildschirmes angeordnet ist, eine zur Rückwand (4) des Gehäuses (2) hin orientierte Wärmebrücke (8) aus wärmeleitfähigem Material ausgebildet ist, die im Betriebszustand an der Rückwand (4) anliegt.

3. Vorrichtung (1) nach einem der vorangehenden Ansprüche, bei der zwischen der Leiterplatte (7) und einer abschließenden vorderseitigen Glasplatte des Bildschirmes befindliche, beim Betrieb des Bildschirmes erwärmte Luft über mindestens einen Kanal in den Raum (10) zwischen Leiterplatte (7) und Rückwand (4) führbar ist.

4. Vorrichtung (1) nach einem der vorangehenden Ansprüche, bei der das Profil (5) auf die Rückwand (4) aufgeschraubt ist.

5. Vorrichtung (1) nach einem der vorangehenden Ansprüche, bei der die kaminähnlichen Hohlräume (6) im Querschnitt im wesentlichen patronenförmig, mit abgerundeten Ende nach außen weisend, ausgebildet sind.

6. Vorrichtung (1) nach einem der vorangehenden Ansprüche, bei der die einzelnen kaminähnlichen Hohlräume (6) voneinander beabstandet angeordnet sind.

7. Vorrichtung (1) nach einem der vorangehenden Ansprüche, bei der das Gehäuse einen aus stranggepreßtem Aluminiumprofil bestehenden Rahmen (3) hat und die Rückwand (4) aus einem stranggepreßten Aluminiumprofil gebildet ist.

8. Vorrichtung (1) nach Anspruch 7, bei der der Gehäuserahmen (3) aus Teilstücken besteht, die durch Laserschweißen miteinander verbunden sind.

## Claims

1. An apparatus (1) for mounting and cooling a flat screen during operation, comprising a housing (2) for accommodating the flat screen and heat generating electric and/or electronic units, and at least one thermal bridge (8) for conducting the heat generated by these units to a heat conductive rear wall (4) of the housing, said wall being provided with a profile (5) which forms a plurality of chimney-like cavities (6) at the rear side of the housing (2), wherein in the lower end portion of each cavity at least one opening (15) for supplying cool air into the respective cavity is formed and in the upper end portion of each cavity at least one outlet opening (16) for discharging heated air from the cavity to the atmosphere is formed,
**characterised in that**
the rear wall (4) of the housing (2) comprises a plurality of through holes (17) arranged adjacent to the cavities (6), said through holes (17) serving for supplying and discharging air into and from a space (10) arranged between the heat generating units and the rear wall (4).

2. An apparatus (1) as claimed in claim 1, wherein a thermal bridge (8) made of heat conductive material and being oriented towards the rear wall (4) of the housing (2) is formed on at least one position of a printed circuit board (7) attached on a housing frame (3), with a plurality of heat generating components of the flat screen being arranged on said printed circuit board, said thermal bridge (8) contacting the rear wall (4) in operation.

3. An apparatus (1) as claimed in one of the preceding claims, in which the air, which is located between the printed circuit board (7) and a final front glass plate of the flat screen and is heated during operation, is conducted into a space (10) between the printed circuit board (7) and the rear wall (4) via at least one channel.

4. An apparatus (1) as claimed in one of the preceding claims, in which the profile (5) is attached to the rear wall (4) by means of screws.

5. An apparatus (1) as claimed in one of the preceding claims, in which the chimney-like cavities (6) have an essentially cartridge-like cross section which has a rounded apex directed to the outside.

6. An apparatus (1) as claimed in one of the preceding claims, wherein the chimney-like cavities (6) each have a spacing from one another.

7. An apparatus (1) as claimed in one of the preceding claims, in which the housing frame (3) and the rear wall (4) are formed of extruded aluminium profiles.

8. An apparatus (1) as claimed in claim 7, in which the housing frame (3) consists of a plurality of parts that are joined by means of laser welding.

## Revendications

1. Dispositif (1) pour le support et le refroidissement d'un écran plat en service, présentant un coffret (2) pour recevoir l'écran plat et des unités électriques et/ou électroniques produisant de la chaleur, au moins un pont thermique (8) pour acheminer la chaleur produite par celles-ci vers une paroi arrière thermoconductrice (4) du coffret qui est pourvue d'un profilé (5) lequel est réalisé de telle façon que sur la face arrière du coffret (2), est formée une pluralité d'espaces creux (6) similaires à des cheminées qui, dans leur zone d'extrémité inférieure (12), présentent respectivement au moins une ouverture (15) pour l'arrivée d'air frais dans chaque espace creux (6), et présentent respectivement au moins un orifice de sortie (16) dans la zone d'extrémité supérieure (14) de chaque espace creux (6) pour évacuer l'air réchauffé vers l'extérieur,
**caractérisé en ce que**
la paroi arrière (4) du coffret (2) présente plusieurs ouvertures de passage (17) disposées dans la zone des espaces creux (6), qui servent à l'arrivée ou à l'évacuation d'air dans ou hors d'un espace (10) disposé entre les unités produisant de la chaleur et la paroi arrière (4), hors ou dans les espaces creux (6) mentionnés.

2. Dispositif (1) selon la revendication 1, dans lequel à au moins un emplacement d'une plaque conductrice (7) fixée sur un cadre de coffret, sur laquelle est disposée une pluralité de composants produisant de la chaleur de l'écran plat, un pont thermique (8) orienté sur la paroi arrière (4) du coffret (2) est formé en matériau thermoconducteur, qui, en service, est en appui sur la paroi arrière (4).

3. Dispositif (1) selon l'une des revendications précédentes dans lequel, entre la plaque conductrice (7) et une plaque de verre terminale antérieure de l'écran, de l'air réchauffé lors du fonctionnement de l'écran peut être acheminé via au moins un canal dans l'espace (10) entre la plaque conductrice (7) et la paroi arrière (4).

4. Dispositif (1) selon l'une des revendications précédentes, dans lequel le profilé (5) est vissé sur la paroi arrière (4).

5. Dispositif (1) selon l'une des revendications précédentes, dans lequel les espaces creux (6) similaires à des cheminées, en coupe transversale sont réalisés essentiellement en forme de cartouche, à extrémités arrondies orientées vers l'extérieur.

6. Dispositif (1) selon l'une des revendications précédentes, dans lequel les espaces creux (6) individuels, similaires à des cheminées, sont disposés espacés les uns des autres.

7. Dispositif (1) selon l'une des revendications précédentes, dans lequel le coffret présente un cadre (3) constitué d'un profilé en aluminium extrudé et la paroi arrière (4) est réalisée en un profilé d'aluminium extrudé.

8. Dispositif (1) selon la revendication 7, dans lequel le cadre de coffret (3) est constitué de pièces partielles, qui sont assemblées les unes aux autres par soudage au laser.
